# EUROPÄISCHE PATENTSCHRIFT

(11) **EP 1 863 627 B1**
(45) Veröffentlichungstag und Bekanntmachung des Hinweises auf die Patenterteilung: **13.07.2011**
(21) Anmeldenummer: 06725050.6
(22) Anmeldetag: 14.03.2006
(51) Int. Cl.: B29C 47/00, B01J 20/26, B01J 20/30

(54) **VERFAHREN ZUR HERSTELLUNG VON ALS FILTERHILFSMITTELN GEEIGNETEN POLYMER-BLENDS UND DIE VERWENDUNG DER POLYMER-BLENDS**
METHOD FOR PRODUCING POLYMER BLENDS SUITED FOR USE AS FILTER AIDS AND THE USE OF THE POLYMER BLENDS
PROCEDE DE FABRICATION DE MELANGES POLYMERES SERVANT D'AUXILIAIRES DE FILTRAGE ET LA UTILISATION DES MELANGES POLYMERES

(30) Priorität: 16.03.2005 DE 102005012483
(43) Veröffentlichungstag der Anmeldung: 12.12.2007
(73) Patentinhaber: BASF SE, 67056 Ludwigshafen (DE)
(72) Erfinder: MATHAUER, Klemens, 69115 Heidelberg (DE); PIEROBON, Marianna, 67063 Ludwigshafen (DE); PETSCH, Tobias, 55758 Mörschied (DE); SCHILLO, Simone, 67069 Ludwigshafen (DE); KERBER, Michael, 69469 Weinheim (DE); MÜLLER, Frank, 67069 Ludwigshafen (DE)
(86) Internationale Anmeldenummer: PCT/EP2006/060702
(87) Internationale Veröffentlichungsnummer: WO 2006/097469

(56) Entgegenhaltungen:
- EP-A- 1 325 777
- WO-A-02/32544

## Beschreibung

Die vorliegende Erfindung betrifft ein verbessertes Verfahren zur Herstellung von Polymer-Blends auf Basis von Polystyrol und Popcorn-Polymeren durch Verarbeiten der Komponenten in einem Extruder sowie die Verwendung solcher Mittel als Filterhilfsmittel.

Die Trennung von fest-flüssigen Stoffgemischen über Filtration ist in vielen industriellen Produktionsprozessen ein wichtiger Verfahrensschritt. Unter dem Begriff Filterhilfsmittel versteht man eine Reihe von Produkten, die in loser, pulvriger, granulierter oder faseriger Form in der Filtration eingesetzt werden.

Filterhilfsmittel kann man vor Beginn der Filtration als Filterhilfsschicht (Anschwemmfilter) auf das Filter aufbringen , um einen lockeren Kuchenaufbau zu erzielen, oder kontinuierlich der zu filternden Trübe zusetzen.

Unter dem Begriff der Filtration versteht man das Durchströmen eines porösen Filtermittels durch eine Suspension (Trübe), bestehend aus einer diskontinuierlichen Phase (dispergierte Stoffe) und einer kontinuierlichen Phase (Dispersionsmittel) Dabei werden Feststoffteilchen auf dem Filtermittel abgelagert und die filtrierte Flüssigkeit (Filtrat) verlässt das Filtermittel klar. Als äußere Kraft zur Überwindung des Strömungswiderstands wirkt hierbei eine angelegte Druckdifferenz.

Man kann beim Filtrationsvorgang grundsätzlich verschieden Mechanismen der Feststoffabtrennung beobachten. Hauptsächlich handelt es sich hierbei um eine Oberflächen- oder Kuchenfiltration, Schichtenfiltration sowie Siebfiltration. Häufig hat man es mit einer Kombination aus mindestens zwei Vorgängen zu tun.

Im Falle der Oberflächen- oder Kuchenfiltration kommen sogenannte Anschwemmfilter in verschiedenen Ausführen für die Getränkefiltration zur Anwendung.

Bei allen Anschwemmsystemen werden die in der zu filtrierenden Flüssigkeit enthaltenen Feststoffe und auch die absichtlich zudosierten Feststoffe (Filterhilfsmittel) durch ein Filtermedium zurückgehalten, wobei sich ein Filterkuchen aufbaut. Dieser ist im Verlauf der Filtration ebenso wie das Filtermittel zu durchströmen. Eine solche Filtration wird auch als Anschwemmfiltration bezeichnet.

Unter den erfindungsgemäß zu filternden Flüssigkeiten versteht man Getränke, insbesondere Fruchtsäfte oder Gärungsgetränke wie Wein oder Bier. Insbesondere wird das nach dem erfindungsgemäßen Verfahren erhaltene Filterhilfsmittel zur Filtration von Bier verwendet. Die Filterhilfsmittel können aber beispielsweise auch zur Behandlung von Teeprodukten, Schaumweinen oder allgemein zur Adsorption von unerwünschten Inhaltsstoffen aus Nahrungs- und Genussmitteln eingesetzt werden.

In der US 4344846 ist eine Methode zur Anschwemmfiltration mit Filterhilfsmitteln auf Basis expandierten Polystyrols beschrieben.

In der EP 351 363 werden hochvernetzte Polyvinylpyrrolidone als Stabilisierungs- und Filterhilfsmittel beschrieben.

Aus der WO 02/32544 sind Filterhilfsmittel auf Basis von Polystyrol bekannt. Die Herstellung kann durch Compoundieren des Polystyrols in Gegenwart einer weiteren Komponente im Extruder erfolgen. Als weitere Komponente können neben einer Vielzahl von anorganischen Verbindungen wie Silikaten, Carbonaten, Oxiden und dergleichen auch Polymere wie beispielsweise quervernetztes Polyvinylpyrrolidon eingesetzt werden.

Allerdings hat sich gezeigt, dass Produkte wie sie dort erhalten werden, bei der Mahlung Probleme bereiten können. So ist die Mahlung nur unter erhöhtem Energieaufwand möglich und insofern im technischen Maßstab nicht wirtschaftlich.

Aufgabe der vorliegenden Erfindung war es, ein verbessertes Verfahren zur Herstellung von Filterhilfsmitteln auf Basis von Polystyrol, enthaltend zusätzlich vernetztes Polyvinylpyrrolidon, zu finden, dass zu einer verbesserten Mahlbarkeit führt, ohne dass die für die Filterwirkung so wichtige Morphologie des Compounds negativ beeinträchtigt wird.

Demgemäß wurde ein Verfahren zur Herstellung von als Filterhilfsmittel geeigneten Blend aus Polystyrol und einem quervernetzten wasserunlöslichen Polyvinylpyyrolidon durch Verarbeitung der Komponenten in einem Extruder gefunden, welches durch die Merkmale des Anspruchs 1 gekennzeichnet ist.

Als Polymer-Blends werden Mischungen von chemisch verschiedenen Polymeren bezeichnet. Im Falle der vorliegenden Erfindung bestehen die Blends aus einer thermoplastischen Polystyrol-Komponente und einem nicht-thermoplastischen wasserunlsölichen vernetzten Polyvinylpyrrolidon-Popcorn-Polymer, wobei die Blends mit physikalischen Methoden nicht in die Einzelkomponenten zerlegt werden können.

Als Polystyrol-Komponente kommen alle gängigen Polystyrol-Typen in Betracht, wie Standard-Polystyrol, schlagzähmodifiziertes Polystyrol (SB-Typen) wie Copolymere aus Styrol und Butadien oder hochschlagzähmodifiziertes Polystyrol (HIPS-Typen), beispielsweise mit Polybutadien-Kautschuk oder Styrol-Butadien-Kautschuk modifziertes Polystyrol. Solche Polystyrole sind kommerziell erhältlich, beispielsweise als PS 158 k, PS 486 M oder Styrolux® (Fa. BASF).

Erfindungsgemäß enthalten die Blends neben der Polystyrol-Komponente als zweite Polymer-Komponente in Wasser unlösliche, bei Wasseraufnahme nicht gelbildende, vernetzte Polyvinylpyrrolidon-Polymerisate, die in der Literatur auch als sogenannte Popcorn-Polymere bezeichnet werden (Vgl. J.W. Breitenbach, Chimia, Vol. 21, S. 449-488, 1976). In den Pharmakopöen wie USP oder Ph.Eur. werden solche Polymerisate als Crospovidone bezeichnet. Solche Polymere weisen eine poröse Struktur auf und sind reich an Hohlräumen. Die Polymere sind wie gesagt auch bei Wasseraufnahme nicht gelbildend. Das Quellvolumen solcher Polymerisate in Wasser bei 20 °C liegt üblicherweise im Bereich von 2 bis 10 l/kg, vorzugsweise bei 4 bis 8 l/kg.

Die Herstellung von Popcorn-Polymeren ist an sich bekannt. Ob eine Polymerisation zu Popcorn-Polymeren anstelle von glasartigen Polymeren führt, wird wesentlich durch die Verfahrensführung beeinflusst. Geeignete Verfahren zur Herstellung von Popcom-Polymeren wie sie im Rahmen der vorliegenden Erfindung eingesetzt werden, sind beispielsweise in der EP-B 88964 beschrieben.

Bei den Popcorn-Polymeren handelt es sich wie gesagt um vernetzte Polymere. Die Vernetzung kann sowohl physikalisch als auch chemisch erfolgen. Als chemische Vernetzer eignen sich generell Verbindungen, die mindestens zwei ethylenisch ungesättigte nichtkonjugierte Doppelbindungen im Molekül enthalten und somit als difunktionelle Vernetzer bei der Polymerisation wirken. Bevorzugte Vertreter sind beispielweise Alkylenbisacrylamide wie Methylen-bisacrylamid und N,N'-Acryloylethylendiamin, N,N'-Divinylethylenharnstoff, N,N'-Divinylpropylenharnstoff, Ethyliden-bis-3-(N-Vinylpyrrolidon), N,N'-Divinylimidazolyl(2,2')butan und 1,1 '-bis-(3,3')vinyl benzimidazolin-2-on)1,4-butan. Weitere geeignete Vernetzer sind beispielsweise Alkylenglycoldi(meth)-acrylate wie Ethylenglykoldiacrylat, Ethylenglykoldimethacrylat, Tetraethylenglykoldiacrylat, Tetraethylenglykoldimethacrylat, Diethylenglykoldiacrylat, Diethylenglykoldimethacrylat, aromatische Divinylverbindungen wie Divinylbenzol und Divinyltoluol sowie Vinylacrylat, Allylacrylat, Allylmethacrylat, Divinyldioxan, Pentaerythrittriallylether, Triallylamine sowie Gemische der Vernetzer.

Besonders bevorzugte Vernetzer sind Ethylenglykoldiacrylat, Ethylenglykoldimethacrylat, N,N'-Divinylethylenharnstoff (DVEH) und Divinylbenzol (DVB).

Die Vernetzer werden in Mengen von 0 bis 10 Gew.%, bevorzugt 1 bis 8 Gew.%, besonders bevorzugt 0,2 bis 5 Gew.%, bezogen auf die Gesamtmenge des Polymerisats eingesetzt.

Solche Crospovidone sind kommerziell erhältlich, beispielsweise als Divergan®-Typen, Fa. BASF oder Polyplasdone®-Typen, Fa. ISP.

Die Popcorn-Polymere weisen im allgemeinen mittlere Korngrößen von 15 µm bis 1500 µm auf.

Die Mengenverhältnisse werden dabei so gewählt, dass das Filterhilfsmittel 20 bis 95, bevorzugt 50 bis 85, besonders bevorzugt 60 bis 75 Gew.-% eines Polystyrols, und 5 bis 80, bevorzugt 15 bis 50, besonders bevorzugt 40 bis 25 Gew.-% vernetztes wasserunlösliches Polyvinylpyrrolidon enthält.

Für das erfindungsgemäße Verfahren eignen sich prinzipiell die üblichen, dem Fachmann bekannten Extrudertypen. Diese umfassen üblicherweise ein Gehäuse, eine Antriebseinheit sowie eine Plastifiziereinheit aus einer oder mehreren mit Förder- oder Knetelementen versehenen rotierenden Achsen (Schnecken).

Längs der Schnecken erstrecken sich in Transportrichtung mehrere Abschnitte, die im erfindungsgemäßen Verfahren eine Einzugszone, eine Mischzone und eine Ausstosszone umfassen. Weiterhin können auch Entgasungszonen vorgesehen sein, wobei die Entgasung bei Atmosphärendruck und/oder Vakuum erfolgen kann. Die Vakuumentgasung kann beispielsweise mit Hilfe einer Stopfschnecke und einer Dampfstrahlpumpe erfolgen.

Jeder dieser Abschnitte kann wiederum einen oder mehrere Zylinder (Schüsse) als kleinste unabhängige Einheit enthalten.

Die Herstellung der Filterhilfsmittel kann in einem Einschneckenextruder , einem Zweischneckenextruder oder in Mehrschneckenextrudern erfolgen, bevorzugt aber in einem Zweischneckenextruder. Mehrere Schnecken können gleichsinnig oder gegensinnig drehend, kämmend oder dicht kämmend ausgeführt sein. Der Extruder ist vorzugsweise gleichsinnig dicht kämmend ausgelegt. Die einzelnen Zylinder sollen beheizbar sein. Weiterhin können die Zylinder auch für eine Kühlung ausgelegt sein, beispielsweise für Kühlung mit Wasser.

Die Schnecken können aus allen in der Extrusion üblichen Elementen aufgebaut sein. Sie können neben üblichen Förderelementen auch Knetscheiben oder Rückförderelemente enthalten. Welche Schneckenkonfiguration im Einzelfall geeignet ist, kann der Fachmann durch einfache Versuche ermitteln. Das Verhältnis von Schraubenlänge zu Schraubendurchmesser (LD-Verhältnis) kann 25 :1 bis 50 :1 betragen vorzugsweise 30 : 1 bis 40:1.

Der erfindungsgemäß verwendete Extruder gliedert sich im wesentlichen in folgende Abschnitte auf:

In einem ersten Abschnitt wird das Polystyrol in den Extruder eingebracht und aufgeschmolzen. Die Schneckengeometrie in diesem Abschnitt entspricht den für das Fördern und Aufschmelzen von thermoplastischen Polymeren üblichen Bedingungen. An den mit einer Zufuhrvorrichtung versehenen Zylinder schliessen sich ein bis zwei Zylinder an, in denen das Polystyrol aufgeschmolzen wird. In diesem Bereich können die Schnecken neben Förderelementen auch mit Knetscheiben ausgestattet sein.

In einem zweiten Abschnitt, der als Mischzone ausgelegt ist, wird das quervernetzte Polyvinylpyrrolidon zu dem geschmolzenen Polystyrol zugefahren. Das geschmolzene Polystyrol wird vor der Zugabe vorzugsweise vorentlüftet oder entgast. Die Entgasung/Entlüftung erfolgt bei Drücken von 0.005 bis 0.1 MPa, vorzugsweise bei Atmosphärendruck. Die Komponenten werden dann innig vermischt, sodass das unter den Verarbeitungsbedingungen feste vernetzte Polyvinylpyrrolidon homogen in dem geschmolzenen Polystyrol dispergiert wird. Dieser Abschnitt enthält ebenfalls übliche Förderelemente. Zur Förderung der Vermischung kann es sich empfehlen zusätzlich Knetscheiben einzubauen. Weiterhin kann es sich empfehlen für eine zusätzliche Verbesserung der Vermischung auch Rückförderelemente einzubauen. Für diesen Abschnitt werden üblicherweise ein bis drei Zylinder vorgesehen.

Zwischen dieser Mischzone und dem dritten Abschnitt sind Stauelemente angebracht, die vermeiden sollen, dass Wasserdampf in die Einbringvorrichtung für das vernetzte Polymer zurückschlägt und diese verstopft.

Im dritten Abschnitt wird dann zu der Mischung der polymeren Komponenten Wasser zugefahren. Die Zugabe des Wassers kann über übliche Einfüllvorrichtungen erfolgen, beispielsweise über trichterförmige Einfüllvorrichtungen oder mit Hilfe von Dosierpumpen. Anschliessend wird die wasserhaltige Masse unter Vermischung von Wasser und Schmelze weiter in Richtung Austragsöffnung gefördert. Dieser Abschnitt kann je nach Menge der zu verarbeitenden Masse aus ein bis drei Zylindern aufgebaut sein.

Zwischen dem dritten Abschnitt, in dem die Wasserzufuhr erfolgt, und der Austragsöffnung kann auch eine Entgasungszone mit einem oder mehreren Zylindern vorgesehen sein, wobei die Entgasung bei Atmosphärendruck und/oder Vakuum erfolgen kann. Vorzugsweise erfolgt die Entgasung bei Drücken von 0.005 bis 0.1 MPa. Zwischen Entgasungszone und Austragsöffnung können weitere Zylinder vorgesehen sein. Anschliessend wird die noch plastische Masse aus dem Extruder ausgetragen. Die Austragung kann über übliche Düsen-, Lochplatten oder andere geeignete Vorrichtungen erfolgen.

Die Einfüllzone für das Polystyrol wird üblicherweise nicht beheizt. Alle übrigen Zonen wie auch Übergangsstücke zwischen Extruder und Düsenplatte sowie die Düsenplatte selbst werden beheizt, um die Plastizität der Masse zu gewährleisten.

Üblicherweise wird die Manteltemperatur der Extruderschüsse, die Temperatur des Übergangsstücks und der Düsenplatte 180 bis 220°C betragen. Auf jeden Fall muss die Manteltemperatur so gewählt werden, dass die Massetemperatur über dem Schmelzpunkt des Polystyrols liegt, jedoch unter der Zersetzungstemperatur des vernetzten Polymeren.

Die noch plastische Mischung wird vorzugsweise durch eine Düse extrudiert und zerkleinert. Zur Zerkleinerung eignen sich grundsätzlich alle üblichen hierfür bekannten Techniken wie Heiss- oder Kaltabschlag.

Das Extrudat kann beispielsweise mit rotierenden Messer oder mit einem Luftstrahl abgeschlagen werden.

Weiterhin kann das Extrudat durch Wasserringgranulation granuliert werden.

Anschliessend wird das Extrudat gemahlen. Die Mahlung kann in einem oder mehreren Schritten, vorzugsweise in zwei Schritten, erfolgen, so dass die gewünschte Partikelgröße eingestellt wurd. Es können Partikelgrößen von 20 bis 100 µm eingestellt werden. Die Mahlung kann nach Vorzerkleinerung (1. Mahlschritt) in jeder handelsüblichen Rotormühle, vorzugsweise einer gegenläufigen Stiftmühle, unter Kühlung des Produktes mit Flüssigstickstoff oder einem anderen handelsüblichen Kälteträger, z.B. Trockeneis, auf eine Temperatur von -50°C bis +5°C, in einem 2. Mahlschritt in jeder handelsüblichen Gegenstrahlmühle erfolgen. Für die zweite Mahlung eignet sich bevorzugt das Verfahren der Kaltmahlung. Dabei wird der zu mahlenden Masse ein kaltes inertes Gas zugeführt. Als Mahlgas kann beispielsweise Stickstoff oder Argon eingesetzt werden. Das Mahlgas wird vorzugsweise auf Temperaturen von -50 bis +5 °C gekühlt.

Gewünschtenfalls kann das Extrudat vor der Mahlung auch getrocknet werden.

Die Filterhilfsmittel weisen nach dem 1. Mahlschritt eine mittlere Partikelgröße von 45 bis 100 µm, vorzugsweise 45 bis 75 µm, auf.

Die Filterhilfsmittel weisen nach der zweiten Mahlung vorzugsweise mittlere Partikelgrößen von 20 bis 40 µm auf.

Die Filterhilfsmittel weisen nach dem 1. Mahlschritt eine mittlere Partikelgröße von 45 bis 100 µm, vorzugsweise 45 bis 75 µm, auf.

Die Filterhilfsmittel weisen nach der zweiten Mahlung vorzugsweise mittlere Partikelgrößen von 20 bis 40 µm auf.

Die mittlere Partikelgröße wird als Massensummenverteilung ermittelt.

Gewünschtenfalls können die Filterhilfsmittel anschliessend auch einem Verfahren zur Absenkung des Restmonomerengehalts an Styrol unterworfen werden. Dies kann erfolgen, indem man den teilchenförmigen Blend mit Wasser mischt, die Mischung einer Wasserdampfdestillation unterwirft und anschliessend den teilchenförmigen Blend isoliert oder indem man der Mischung aus teilchenförmigen Blend und Wasser in einem mit einer Vorrichtung zur Bewegung der Masse ausgestatteten Behälter, beispielsweise einem Schaufeltrockner, direkt das Wasser entzieht.

Für die Verwendung als Filterhilfsmittel können sowohl gemahlene Extrudate mit einer einheitlichen mittleren Partikelgröße als auch Gemische von Mahlfraktionen mit unterschiedlicher mittlerer Partikelgröße eingesetzt werden. So kann man beispielsweise eine Mischung aus gemahlenem Extrudat des ersten Mahlschritts und gemahlenem Extrudat aus dem zweiten Mahlschritt verwenden. Die Mengenverhältnisse solcher Mischungen sind frei wählbar und richten sich üblicherweise nach der Art des zu filtrierenden Produkts. So können beispielsweise Mischungen aus einem Mahlprodukt des ersten Mahlschritts mit Mahlprodukt des zweiten Mahlschritts mit Mengenverhältnissen von 5:95 bis 95:5, 20:80 bis 80:20, 30:70 bis 70:30, 40:60 bis 60:40 oder 50:50 verwendet werden. Ebenso können aber auch Mahlprodukte des zweiten Mahlschritts mit mittleren Partikelgrößen von 20 bis 40 µm alleine verwendet werden. Auch die Mahlprodukte des ersten Mahlschritts mit mittleren Partikelgrößen von 45 bis 100 µm können alleine verwendet werden.

Überaschenderweise lassen sich durch das erfindungsgemäße Verfahren auf einfache Weise Granulate herstellen, die ohne erhöhten Energieaufwand durch Mahlen auf die gewünschten Partikelgrößen eingestellt werden können.

Überraschend war auch, dass trotz des Einbringens von Wasser keine Entmischung des Blends auftrat und die Morphologie nicht beeinflusst wurde.

Der Fachmann hätte erwartet, dass die Eigenschaft der Popcorn-Polymerisate in Kontakt mit Wasser unter Umständen einen hohen Quelldruck zu entwickeln, die Einarbeitung in die Polystyrol-Matrix verhindern und statt dessen zu einer Phasenentmischung der beiden Komponenten führen würde. Auch bei der Mahlung wurde keine Entmischung der Komponenten beobachtet.

### Extruderaufbau:

9 Schüsse (Zonen 0 bis 8), beheizter Übergangsflansch (Zone 9), Düsenplatte (Zone 10). Zwischen Zone 5 und Zone 6 waren die Schnecken mit einem Stauelement versehen. Das UD-Verhältnis betrug 37.

Das Temperaturprofil wurde für alle Versuche wie folgt gewählt, wobei jeweils die Manteltemperatur angegeben ist:
Zone 0: RT; Zone 2: 200°C, Zonen 3-5: 180°C; Zone 6: 185°C; Zonen 7-9: 190 ^C; Düsenplatte: 210°C

Die Rotationsgeschwindigkeit der Schnecke betrug 200 Upm.

Das austretende Extrudat wurde durch Wasserringgranulierung geformt.

Das gemäß den Beispielen 1, 4, 5 und 6 verwendete Material wurde durch Extrusion von 70 Gew.-% Polystyrol 158 K und 30 Gew.-% Crospovidone erhalten. Das Material gemäß den Beispielen 2 und 3 wurde unter Verwendung von Polystyrol 486 M bei den gleichen Gewichtsverhältnissen erhalten.

Mahlung:
Die Messung der. Partikelgröße erfolgte mittels eines Laserbeugungsspektrometers, Typ Malvern Insitec, bei Trockendispergierung des Produktes mit einem Druck von 0.3 MPa. X50: mittlere Partikelgröße, Massensummenverteilung.

### Mahlung des Materials gemäß den Beispielen 1 bis 5:

Erster Schritt: Das Extrudat wurde in einer gegenläufigen Stiftmühle vom Typ Pallmann PP L18 mit Stifteinsätzen bei einer Hauptrotordrehzahl von 10.000 Upm und einer Gegenrotordrehzahl von 3300 Upm und einem Durchsatz 10 kg/h zerkleinert. Das Extrudat wurde mit Flüssigstickstoff in einer Kühlschnecke gekühlt. Die Mühleneintrittstemperatur betrug -20°C.

Zweiter Schritt: Dieser erfolgte in einer Fließbett-Gegenstrahlmühle vom Typ Hosokawa Alpine AFG 200. Als Mahlgas kam auf -5 bis +5 °C vorgekühlter Stickstoff bei einem Mahldruck von 0.8 MPa zum Einsatz. Die Mühle war mit drei Mahldüsen, Durchmesser 4mm, ausgestattet. Als Sichtrad kam das Standard-Stahl-Lamellenrad ATP 100 der Fa. Hosokawa-Alpine bei einer Sichtraddrehzahl von 3500 Upm zum Einsatz. Das erfindungsgemäß compoundierte Granulat wurde mit Raumtemperatur über eine Dosierschnecke und eine Taktschleuse der Mühle zugegeben und auf die angegebene Korngröße gemahlen.

### Mahlung des Materials gemäß Beispiel 6:

Erste Schritt: In einer gegenläufigen Stiftmühle vom Typ Hosokawa Alpine Contraplex 250 CW wurde das Extrudat bei einer gehäuseseitigen Rotordrehzahl von 11.200 Upm und einer türseitigen Rotordrehzahl von 5200 Upm und einem Durchsatz 90 kg/h zerkleinert. Das Extrudat wurde mit Flüssigstickstoff in einer Kühlschnecke gekühlt. Die Mühlenaustrittstemperatur betrug -20°C.

Zweiter Schritt: Dieser erfolgte in einer Fließbett-Gegenstrahlmühle vom Typ Hosokawa Alpine AFG 400. Als Mahlgas kam auf +5°C vorgekühlter Stickstoff bei einem Mahldruck von 0.8 MPa zum Einsatz. Die Mühle war mit drei Mahldüsen, Durchmesser 8 mm, ausgestattet. Als Sichtrad kam das Standard -Stahl-Lamellenrad ATP 200 der Fa. Hosokawa-Alpine bei einer Sichtraddrehzahl von 2450 Upm zum Einsatz. Das erfindungsgemäß compoundierte Granulat wurde mit Raumtemperatur über eine Dosierschnecke und eine Taktschleuse der Mühle zugegeben und auf die angegebene Korngröße gemahlen.

| Beispiel Nr. | Wassermenge bei Extrusion [Gew.-%] | X50 1. Mahlung [µm] | X50 2. Mahlung [µm] | Durchsatz 2. Mahlung [kg/h] |
|---|---|---|---|---|
| 1 | 1.5 | 98 | 31 | 3.5 |
| 2 | 0.75 | 60 | 32 | 3 |
| 3 | 1.5 | 68 | 32 | 4 |
| 4 | 0.5 | 97 | 33 | 5.3 |
| 5 | 1.5 | 78 | 29 | 5 |

| Beispiel Nr. | Wassermenge bei Extrusion [Gew.%] | X50 1. Mahlung [µm] | Durchsatz 1, Mahlung kg/h | X50 2. Mahlung [µm] | Durchsatz 2. Mahlung kg/h |
|---|---|---|---|---|---|
| 6 | 0.5 | 51 | 90 | 27 | 33 |

### Anwendungsbeispiele: Filtration von unfiltriertem Bier

Die Filtration wurde mit Material gemäß Beispiel 6 durchgeführt, wobei eine Mischung aus 60 Gew.-% einer Fraktion des 1. Mahlschritts (X50 : 51 µm) und 40 Gew.-% einer Fraktion des 2. Mahlschritts (X50 : 27 µm) verwendet wurde.

Die Filtrationswirkung wurde an unfiltriertem Bier bestimmt. Die Untersuchung wurde als Anschwemmfiltration mittels eines Pilotkerzenfilters (Spaltweite 70 µm, Filterfläche 0,032 m², Durchsatz 15 l/h) durchgeführt. Das Filtrat gilt als klar, wenn der EBC-Wert weniger als 1 beträgt. Außerdem wurde die Durchflussrate gemessen. Es zeigte sich, dass das Material eine ebenso gute Filtrationswirkung wie Kieselguhr entfaltet.

| Probe | Material gemäß Bsp. Nr.4 | Regeneriertes Material gemäß Bsp, Nr.4 | Zum Vergleich: Kieselgur |
|---|---|---|---|
| Trübung vor Filtra tion | 7 EBC | 7 EBC | 7 EBC |
| Trübung nach einem Durchflussvolumen von | | | |
| 30 I (2Stunden) | 0.9 EBC | 0.6 EBC | 0.7 EBC |
| 60 I (4 Stunden) | 0.9 EBC | 0.6 EBC | 0.7 EBC |
| 90 I (6 Stunden) | 0.9 EBC | | 0.7 EBC |
| Durchflussrate | 15 l/h | 15 l/h | 15 l/h |

## Patentansprüche

1. Verfahren zur Herstellung von als Filterhilfsmittel geeigneten Polymer-Blends aus Polystyrol und quervernetzten wasserunlöslichen Polyvinylpyrrolidonen durch Verarbeitung der beiden Komponenten in einem Extruder, wobei Polystyrol in einem Extruder aufgeschmolzen, anschliessend mit dem Polyvinylpyrrolidon versetzt wird, **dadurch gekennzeichnet, dass** der Mischung der Komponenten 0.1 bis 10 Gew.-%, bezogen auf die Gesamtmenge von Polystyrol und vernetzdem Polyvinylpyrrolidon. an Wasser zugesetzt werden und die Mischung extrudiert und die Extrudate durch Mahlung auf die gewünschte Partikelgröße eingestellt werden und die Verarbeitung bei Manteltemperaturen von 180 bis 220 °C erfolgt.

2. Verfahren nach Anspruch 1, **dadurch gekennzeichnet, dass** das Filterhilfsmittel 20 bis 95 Gew.-% Polystyrol und 5 bis 80 Gew.-% Polyvinylpyrrolidon enthält.

3. Verfahren nach Anspruch 1 oder 2, **dadurch gekennzeichnet, dass** das Filterhilfsmittel 50 bis 85 Gew.-% Polystyrol und 15 bis 50 Gew.-% Polyvinylpyrrolidon enthält.

4. Verfahren nach Anspruch 1 oder 2, **dadurch gekennzeichnet, dass** das Filterhitfsmittel 60 bis 75 Gew.-% Polystyrol und 25 bis 40 Gew.-% Polyvinylpyrrolidon enthält.

5. Verfahren nach einem der Ansprüche 1 bis 4, **dadurch gekennzeichnet, dass** die Menge des während der Extrusion zugesetzten Wassers 0.5 bis 5 Gew.% beträgt

6. Verfahren nach einem der Ansprüche 1 bis 5, **dadurch gekennzeichnet, dass** die Polystyrolschmelze vor Zugabe des Polyvinylpyrrolidons entgast wird.

7. Verfahren nach einem der Ansprüche 1 bis 7, **dadurch gekennzeichnet, dass** das austretende Extrudat durch Wasserringgranulation ausgeformt wird.

8. Verfahren nach einem der Ansprüche 1 bis 7 , **dadurch gekennzeichnet, dass** die Mahlung in einem oder mehreren Schritten erfolgt.

9. Verfahren nach einem der Ansprüche 1 bis 8, **dadurch gekennzeichnet, dass** mittlere Partikelgrößen von 45 bis 100 µm erhalten werden.

10. Verfahren nach einem der Ansprüche 1 bis 8, **dadurch gekennzeichnet, dass** mittlere Partikelgrößen von 20 bis 40 µm erhalten werden.

11. Verfahren nach einem der Ansprüche 1 bis 10, **dadurch gekennzeichnet, dass** die gewünschte Partikelgröße durch Kaltmahlung eingestellt wird.

12. Verwendung von Polymer-Blends hergestellt nach dem Verfahren gemäß einem der Ansprüche 1 bis 11 als Filterhilfsmittel

13. Verwendung nach Anspruch 12, **dadurch gekennzeichnet, dass** eine Mischung von gemahlenen Polymer-Blends mit unterschiedlicher mittlerer Partikelgröße eingesetzt wird.

14. Verwendung nach Anspruch 12, **dadurch gekennzeichnet, dass** ein gemahlener Polymer-Blend mit einheitlicher mittlerer Partikelgröße eingesetzt wird.

15. Verwendung nach einem der Ansprüche 12 bis 14, zur Behandlung von Getränken.

16. Verwendung nach einem der Ansprüche 12 bis 15 zur Filtration von Bier.

## Claims

1. A process for production of polymer blends which are suitable as filter aids and are composed of polystyrene and of crosslinked water-insoluble polyvinylpyrrolidones via processing of the two components in an extruder, polystyrene being melted in an extruder and then being treated with the polyvinylpyrrolidone, which comprises adding, to the mixture of the components, from 0.1 to 10% by weight of water, based on the total amount of polystyrene and crosslinked polyvinylpyrrolidone, and extruding the mixture and adjusting the extrudates via grinding to the desired particle size and the processing taking place at barrel temperatures of from 180 to 220°C.

2. The process according to claim 1, wherein the filter aid comprises from 20 to 95% by weight of polystyrene and from 5 to 80% by weight of polyvinylpyrrolidone.

3. The process according to claim 1 or 2, wherein the filter aid comprises from 50 to 85% by weight of polystyrene and from 15 to 50% by weight of polyvinylpyrrolidone.

4. The process according to claim 1 or 2, wherein the filter aid comprises from 60 to 75% by weight of polystyrene and from 25 to 40% by weight of polyvinyl pyrrolidone.

5. The process according to any of claims 1 to 4, wherein the amount of the water added during the extrusion process is from 0.5 to 5% by weight.

6. The process according to any of claims 1 to 5, wherein the polystyrene melt is devolatilized prior to addition of the polyvinylpyrrolidone.

7. The process according two any of claims 1 to 6, wherein the emerging extrudate is shaped via water-cooled die-face pelletization.

8. The process according to any of claims 1 to 7, wherein the grinding takes place in one or more steps.

9. The process according to any of claim 1 to 8, wherein average particle sizes of from 45 to 100 µm are obtained.

10. The process according to any of claims 1 to 8, wherein average particle sizes of from 20 to 40 µm are obtained.

11. The process according to any of claims 1 to 10, wherein the desired particle size is set via low-temperature grinding.

12. The use of polymer blends produced by the process according to any of claims 1 two 11 as filter aids.

13. The use according to claim 12, wherein a mixture of ground polymer blends with different average particle size is used.

14. The use according to claim 12, wherein a ground polymer blend with single average particle size is used.

15. The use according to any of claims 12 to 14, for treatment of drinks.

16. The use according to any of claims 12 to 15 for filtration of beer.

## Revendications

1. Procédé pour la préparation de mélanges de polymères appropriés comme adjuvants de filtration à partir de polystyrène et de polyvinylpyrrolidones réticulées, insolubles dans l'eau, par traitement des deux composants dans une extrudeuses où le polystyrène est fondu dans une extrudeuse, puis additionné de polyvinylpyrrolidone, **caractérisé en ce que** le mélange des composants est additionné de 0,1 à 10% en poids, par rapport à la quantité totale de polystyrène et de polyvinylpyrrolidone réticulée, d'eau et le mélange est extrudé et les produits extrudés sont réglés à la grosseur de particules souhaitée par broyage et le traitement est réalisé à des températures d'enveloppe de 180 à 220°C.

2. Procédé selon la revendication 1, **caractérisé en ce que** l'adjuvant de filtration contient 20 à 95% en poids de polystyrène et 5 à 80% en poids de polyvinylpyrrolidone.

3. Procédé selon la revendication 1 ou 2, **caractérisé en ce que** l'adjuvant de filtration contient 50 à 85% en poids de polystyrène et 15 à 50% en poids de polyvinylpyrrolidone.

4. Procédé selon la revendication 1 ou 2, **caractérisé en ce que** l'adjuvant de filtration contient 60 à 75% en poids de polystyrène et 25 à 40% en poids de polyvinylpyrrolidone.

5. Procédé selon l'une quelconque des revendications 1 à 4, **caractérisé en ce que** la quantité d'eau ajoutée au cours de l'extrusion est de 0,5 à 5% en poids.

6. Procédé selon l'une quelconque des revendications 1 à 5, **caractérisé en ce que** la masse fondue de polystyrène est dégazée avant l'addition de la polyvinylpyrrolidone.

7. Procédé selon l'une quelconque des revendications 1 à 6, **caractérisé en ce que** le produit extrudé sortant est moulé par une granulation par anneau d'eau.

8. Procédé selon l'une quelconque des revendications 1 à 7, **caractérisé en ce que** le broyage est réalisé en une ou plusieurs étapes.

9. Procédé selon l'une quelconque des revendications 1 à 8, **caractérisé en ce qu'**on obtient des grosseurs moyennes des particules de 45 à 100 µm.

10. Procédé selon l'une quelconque des revendications 1 à 8, **caractérisé en ce qu'**on obtient des grosseurs moyennes des particules de 20 à 40 µm.

11. Procédé selon l'une quelconque des revendications 1 à 10, **caractérisé en ce que** la grosseur moyenne souhaitée des particules est réglée par broyage à froid.

12. Utilisation du mélange de polymères préparé selon le procédé selon l'une quelconque des revendications 1 à 11 comme adjuvant de filtration.

13. Utilisation selon la revendication 12, **caractérisée en ce qu'**on utilise un mélange de mélanges de polymères broyés présentant différentes grosseurs moyennes de particules.

14. Utilisation selon la revendication 12, **caractérisée en ce qu'**on utilise un mélange de polymères broyés présentant une grosseur moyenne de particules uniforme.

15. Utilisation selon l'une quelconque des revendications 12 à 14 pour le traitement de boissons.

16. Utilisation selon l'une quelconque des revendications 12 à 15 pour la filtration de bière.
